# EUROPEAN PATENT APPLICATION

(11) **EP 0 995 701 A2**
(43) Date of publication of application: **26.04.2000**
(21) Application number: 99500187.2
(22) Date of filing: 14.10.1999
(51) Int. Cl.: B65G 47/14

(54) **Automatically adjustable separation element**

(30) Priority: 19.10.1998 ES 9802173
(71) Applicant: Bottle automation Manufacturing S.A., Barcelona (ES)
(72) Inventor: Carrasquer Borda, Francisco, 17000 Girona (ES)

(57) **Abstract**

"AUTOMATICALLY ADJUSTABLE SEPARATION ELEMENT", used for bottle positioning machines, cans or containers of any type of material such as plastic or glass, essentially characterized for being made of two round pieces, one central (1) and the other radial (2) located on both sides, working wholy and independently one from the other, in line with the vent-recepacle of the bottle or container's lodge, located consecutively and repeatedly throughout all the external perimeter of a container (3) of a trapezoidal section. This allows the radial piece (2) to separate the two receptacles of bottles or containers, showing as lateral exterior wall a flap (5) of the closing bell of the contaniner, and as the lower face an annular support (6) with a hole.

## Description

### DESCRIPTION OF THE INVENTION

The object of the present invention such as expressed in the announcement of this descriptive report consists of an "AUTOMATICALLY ADJUSTABLE SEPARATION ELEMENT" used for bottle positioning machines, cans or containers of different types of material, such as plastic or glass.

At present, our society requires more and more the final presentation of the product to be perctly packaged, with the correspondent label, expiration date, etc.

This forces manufacturers to design ways to conform to such requirements, including the packaging of the bottle or container and chain labeling for which they have to be previously lined up.

As a result, after their entry in the packaging plant, proceeding from the manufacturing factory, the bottles or containers have to be sent back to a transporting band, perfectly lined up for handling.

Therefore, traditionally, in the case of glass bottles, a bottle charging machine has been used. This machine picks up the bottles from the pallet and deposits them on the transporting band, with has the lateral fencing that closes itself while the band moves forward, allowing the alignment of the bottles for their later packaging and labeling.

This procedure, however, is not valid with plastic bottles or containers, due to the lack of rigidity, and the light weight of such material.

The machine used in this case is formed by a container with a circular base and a trapezoidal section, horizontally positioned, or with an approximate inclination of 30°-35°, which rotates on its central axis, whose interior stores the bottles or containers.

In its outermost zone, one finds a disc, that closes the container, with an axis that turns against the direction of the container, and some outer receptacles or molds of sufficient size to store the bottles or containers, which thanks to these opposite movements have a tendency to disperse and locate themselves into the molds.

Once the bottle or container is located into the mold, the circular movement of the container moves it to face a dismantling screen through which the bottle, due to the effect of gravity, falls through a collector funnel, torward the transporting band in a correct and stable position.

These molds present a configuration that allows the head of the bottle or container to be supported, and independently of how they are introduced, always leaves them standing or vertical.

As a result, the bottles are able to pass through the funnel, and get all the way to the transporting band, this being the following phase of the packaging.

The above mentioned machine positions the bottles or containers of different sizes, always however in accordance with the corresponding molds.
These molds have to be replaced every time the size of the bottle changes.

For that, the machine has to be stopped, and the molds have to be replaced manually by a workman, or automatically, depending on the type of machine in question.

Likewise, in case that the size of the bottle changes, the dimensions of the funnel have to be changed as well.

For all of the above, the present invention has been created.

This consists of an adjustable separation device adaped to the bottle or container positioning machines, thanks to which it is possible to adapt , through special electromechanical, electro-magnetic, and/or electro-pneumatic action to the different sizes of the bottles or containers.

This allows work to continue without the necessity of changing the traditional molds for each bottle's size.

Essentially, the new automatic separation element is formed by two retaining pieces, one central and the other radial, disposed on both sides in line with the accomodation hole-receptacle of the bottle or container.

This element, formed by the two retaining pieces is disposed consecutively and repeatedly throughout all the before described external perimeter of the container's trapezoidal section, so that the radial piece separates two bottle or container receptacles.

The container turns the opposite direction of an upper disc, which allows the introduction of the bottles or similar into the cavities or accomodations. These cavities have a flap of the closing bell of the container as the lateral wall, in the lower zone, an annular brace with an opening for the descent of the bottles through gravity, and torward the next phase.

The central retaining piece is driven step by step by a motor or by any other appropriate action mechanism. Each piece is formed by pivoting arms that move thanks to a spindle or central screw, whose outer parts are equipped with various pieces in the approximate form of an "L" and each presenting branches mainly superimposed distantly from the axle. When in an extended position they open laterally superimposing only on their central part.

The radial retaining piece also includes a step by step motor that puts in action a spindle which allows the movement of a pyramidal piece, perforated by the axle, which in its turn separates two lateral pannels disposed in an "L" shape track with inclined prolongation and opposite outer appendix.

This separation takes place while the pyramid moves vertically through the spindle, that shifts with its movement the inclined part of both lateral pannels, diminishing the accomodation cavity of the bottle or similar.

Likewise, the mentioned wedge separates the above pannels of identical arrangement and reduces the height of the accomodation cavity.

The opening of the branch of the central piece is regulated by the greater or lesser opening of the lateral pannels of the outermost radial pieces, through some tracks in junction with the lateral pannels.

The control of the different step by step motors, or of the other working devices of the radial and central pieces determines a receptacle that can adquire any dimension adaptable to different type of bottles or containers.

The microprocessor has preset different sizes of bottles or containers, and according to the size chosen, the motors, pneumatic piston, or whichever other action method used, automatically positions the central and radial pieces of the separating element.

For the descent of the bottle, the radial pieces count with a trapdoor on both sides of the cavity where the bottles or containers are located. Depending on how the bottles or containers are positioned, the trapdoor will open and let the bottle pass through, while the adjacient trapdoor, by impulse slightly touches the head of the bottle, straightening it up for its descent in vertical position.

The optional opening's command of one or the other trapdoor depends on an optical sensor that scans the profile of the bottle while it determines its position, as well as deciding which of the trapdoors has to open.

Once the bottle, or similar, falls throught the orifice of the annular support, it is sent through the funnel which has an adaptor of the lodging cavity, according to the size of the bottle.

This adaptor is formed by a plate fastened to the base by four tracks, and which is moved by a motor similar to the one contained in the radial and central pieces, so that depending on the amplitude of the bottle, it can expand or retract, leaving sufficient space for the perfect descent of the bottles.

In the zone where the bottle falls, one finds two lateral tracks located face to face, that in their middle part, have a pivoting mechanism that allows them to shut or open, always depending on the size of the bottle, and by means of an adequate mechanism.

### DESCRIPTION OF THE DRAWINGS

With the goal of illustrating what we have so far described, the present report includes a diagram on which, represented in a simplified and schematic way, there is an illustrated example, that does not limit the practical possibilities of the invention.

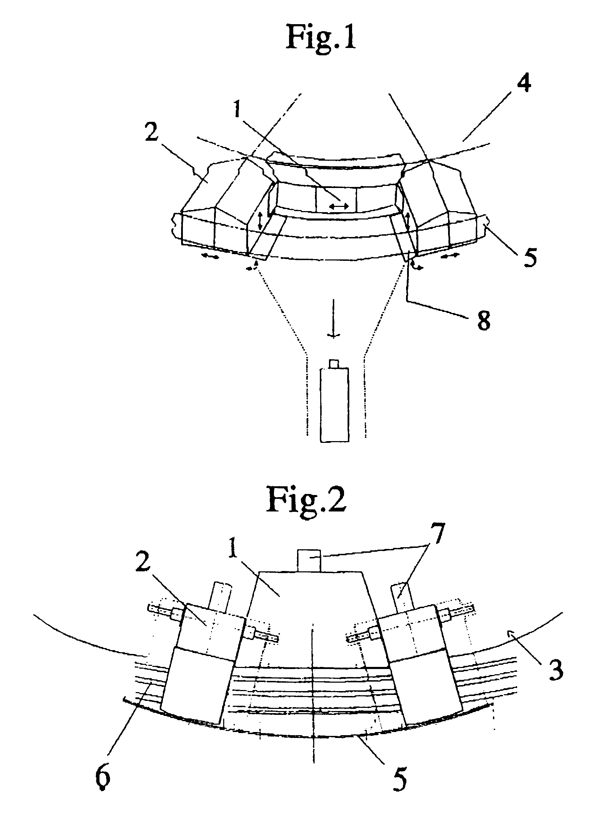

In the above drawings, Figure 1 corresponds to a scheme in perspective of the new separation element with indicative arrows for the movement of these elements.

Figure 2 corresponds to a view of the position of the radial and central piece.

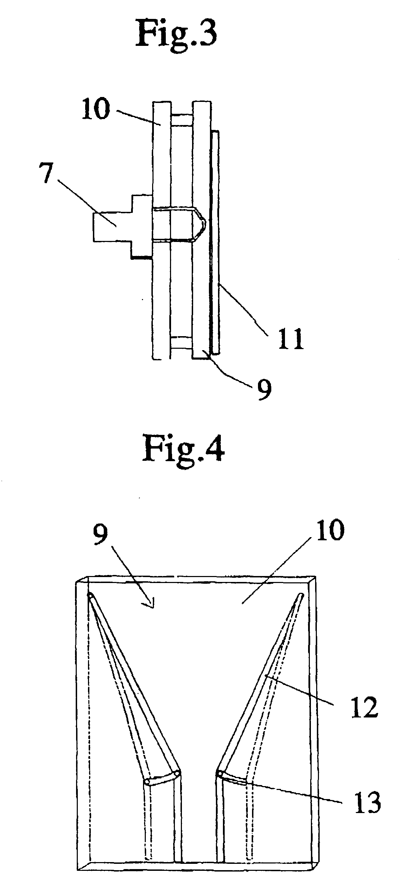

Figure 3 corresponds to different views of the funnel's plate.

Figure 4 corresponds to a view of the plate's front elevation where the pivoting lateral branches can be observed..

### DESCRIPTION OF A PRACTICAL CASE

The new "AUTOMATICALLY ADJUSTABLE SEPARATION ELEMENT" is formed by two retainig pieces, one central (1) and the other radial (2) located on both sides of the adjustable orifice-receptacle, lodging the bottle or container.

This element formed by the two retaining pieces (1) and (2) is placed consecutively and repeatedly throughout all the external perimeter of a container (3) of trapezoidal section, so that the radial piece (2) separates two bottles or containers' receptacles, whose movements are independent the one from the other.

The container (3) turns against the direction of an above located disc (4) which allows the introduction of the bottles or similars in the lodging cavities. These cavities present as lateral walls, a flap (5) of the container's closing bell (5), and in its lower part, an annular support (6) composed by an orifice designed for the descent of the bottles by gravity, all the way to the next phase.

The central retaining (1) piece is driven step by step by a motor (7) or by any other appropriate action mechanism, and is composed by pivoting arm that move thanks to a spindle or central screw, whose extremity is equipped with several pieces in the form of an "L" partially superimposed and folding laterally.

The radial retaining (2) piece is also driven by a step by step motor (7), which moves a spindle or central screw, that allows to move a pyramidal piece. This pieces is perforated by its axle which, in its turn, separates two lateral walls locatde on tracks in the form of an "L" with an inclined prolongation, and an opposite outer appendix.

Likewise, the mentioned pyramidal piece or wedge separates the above pannels of identical arrangement. As a result, the height of the accomodation cavity is reduces.

The opening of the branch of the central piece (1) is regulated by the greater of lesser opening of the lateral pannel s of the outer radial pieces (2) through some tracks in junction to the lateral pannels, not shown in the enclosed illustrat The control of the different step by step motors or of other working devices of the radial (2) and central (1) pieces, allows the receptacle to adquire any dimension adaptable to different types of bottles or containers.

A microprocessor, not shown in the enclosed illustration, presets the different sizes of bottles or containers, and according to the size chosen, the motors, pneumatic piston, or whichever other action mechanism, automatically positions the central (1) and radial (2) pieces of the separating element.

For the descent of the bottle, the radial pieces (2) count with a trapdoor (8) on both sides of the cavity where the bottles or containers are located. Depending on how the bottles or containers are positioned, one of the trapdoor (8) will open, and let the bottle pass through, while the adjacent trapdoor, by impulse, slightly touches the head of the bottle straightening it up for its descent in vertical position through a funnel (9).

The optional opening's command of one or the other trapdoor depends on an optical sensor that scans the profile of the bottle, positions it, and decides which of the trapdoors has to open.

Once the bottle, or similar, falls through the orifice of the annular support (6), it is sent through the funnel (9) which, according to the size of the bottle activates the adaptor of the lodging cavity.

This adaptor is formed by a plate (10) fastened to the base by four tracks (11), and which is moved by a motor similar to the one located in the radial (2) and central (1) pieces.

Likewise, the plate's external face has two lateral tracks (12) located face to face, that in their middle part have a pivoting mechanism (13) that makes them shut or open according to the size of the bottle, thanks to an adequate mechanism.

Having established the above concept, we proceed to state our claims in a brief resumé of the innovative elements over which we wish to establish our claim.

## Claims

1. "AUTOMATICALLY ADJUSTABLE SEPARATION ELEMENT" used in bottle's positioning machines such a plastic or glass, essentially characterised for being made out of two round pieces, one centra (1) and the other radial (2). These pieces located on both sides, work wholy and independently one from the other, in line with the vent-receptacle of the bottle or container's lodge. The bottles are distributed consecutively and repeatedly throughout all the external perimeter of a container (3) of trapezoidal section, so that the radial piece (2) separates two receptacles of bottles or containers. The lateral exterior wall has a flap (5) of the closing bell of the container, and in the lower face has an annular support (6) with a hole.

2. "AUTOMATICALLY ADJUSTABLE SEPARATION ELEMENT" in accordance with the above claim, the element is characterized by its unitary independence in relation to the equal pieces mounted all around the perimeter of the container (3) so that every and each one of them, or every couple of pieces, are independently manageable from the rest of the pieces,or couple of pieces.

3. "AUTOMATICALLY ADJUSTABLE SEPARATION ELEMENT' in accordance with the above claim, the element is characterized by having the central retaining piece (1) work through a step by step motor (7) or any other appropriate action mechanism. This element is formed on both sides by pivoting arms that move by means of a spindle. The edges are formed by a plate in the approximate form on an "L", partially superimposed and folding laterally.

4. "AUTOMATICALLY ADJUSTABLE SEPARATION ELEMENT" in accordance with the above claim, the element is characterized by the radial (2) retaining piece that, like the central retaining piece (1) has a step by step motor (7) or similar device that activates a central screw to move a pyramidal piece. The function of this piece consist in separating two lateral pannels, placed on "L" shaped tracks with an inclined extention, and equipped with some upper pannels of identical arrangement, that function independently.

5. "AUTOMATICALLY ADJUSTABLE SEPARATION ELEMENT" in accordance with the above claim, the element is characterized by the control of the different step by step motors (7), or other action devices, of the radial (2) and central (1) pieces that give access to a receptacle which is adaptable to the dimension of the different types of bottles or containers.

6. "AUTOMATICALLY ADJUSTABLE SEPARATION ELEMENT' in accordance with the above claim, the element is characterized by a microprocessor that stores the data base with different sizes of bottles or containers set and preset at will, modifying and positioning automatically the central (1) and radial (2) parts of the separation element.

7. "AUTOMATICALLY ADJUSTABLE SEPARATION ELEMENT" in accordance with the above claim, the element is characterized by the radial pieces (2) equipped with some trapdoors (8), on both sides of the cavity that lodges the bottle or container. The trapdoors (8) will act or not, when the bottle passes through the orifice of the supporting piece.

8. "AUTOMATICALLY ADJUSTABLE SEPARATION ELEMENT" in accordance with the above claim, the element is characterized by the optional opening of one or the other trapdoor (8) thanks to an optical sensor that by scanning the profile of the bottle determines its position, and which of the trapdoors has to fold at first.

9. "AUTOMATICALLY ADJUSTABLE SEPARATION ELEMENT" in accordance with the above claim, the element is characterized by one of the trapdoors (8) that folds completely while the adjacient one folds by impulse, and recuperates in few seconds its initial position. This trapdoor has slightly knocked on the head of the bottle which has straightened up and has descent through a funnel (9).

10. "AUTOMATICALLY ADJUSTABLE SEPARATION ELEMENT" in accordance with the above claim, the element is characterized by a funnel (9) that includes an adaptor of the cavity lodge formed by a plate (10). This plate is fastened to a base with four tracks (16), and moves thanks to a motor or other type of device, that determines the lodging space of the bottle. The external face of the plate has several lateral tracks (12) located face to face, that in their middle part are formed by a pivoting mechanism (13) or paralel shifting that opens or shuts these tracks according to the size of the bottle, by means of an adequate serving mechanism.
